# FASCICULE DE BREVET EUROPEEN

(11) **EP 2 304 211 B1**
(45) Date de publication et mention de la délivrance du brevet: **12.04.2017**
(21) Numéro de dépôt: 09757709.2
(22) Date de dépôt: 27.04.2009
(51) Int. Cl.: F02K 1/76

(54) **PROCEDE DE SYNCHRONISATION DES ACTIONNEURS D'UN CAPOT MOBILE D'INVERSEUR DE POUSSÉE**
VERFAHREN ZUR SYNCHRONISATION VON AKTUATOREN EINER SCHUBUMKEHREINRICHTUNG
METHOD FOR SYNCHRONIZING THE ACTUATORS OF A MOVABLE THRUST REVERSER COWL

(30) Priorité: 06.06.2008 FR 0803157
(43) Date de publication de la demande: 06.04.2011
(73) Titulaire: Safran Nacelles, 76700 Gonfreville-l'Orcher (FR)
(72) Inventeur: MAALIOUNE, Hakim, F-78630 Orgeval (FR); PEREIRA, David, F-91470 Limours (FR)
(74) Mandataire: Gaillarde, Frédéric F. Ch.
(86) Numéro de dépôt international: PCT/FR2009/050774
(87) Numéro de publication internationale: WO 2009/147333

(56) Documents cités:
- EP-A- 0 096 880
- DE-T2- 60 302 529
- US-A1- 2002 157 376

## Description

La présente invention se rapporte au domaine des inverseurs de poussée pour nacelle d'aéronef.

Plus particulièrement, la présente invention se rapporte aux inverseurs de poussée à grilles, comportant au moins un capot mobile entre une position dite de « jet direct », correspondant à la situation normale en vol, et une position dite de «jet inversé », correspondant à la situation à l'atterrissage, permettant de renvoyer vers l'avant de l'aéronef une partie de la poussée des moteurs, et ainsi de réduire la distance de freinage.

On connaît de la technique antérieure des moyens d'actionnement électrique d'un tel capot entre ses deux positions : , comme connue du document DE60302529T2 ces moyens peuvent comprendre typiquement des vis à billes mues en rotation par des moteurs électriques pilotés par des moyens de supervision électronique.

Classiquement, une pluralité d'actionneurs sont prévus pour chaque capot mobile (ou sur chaque demi-capot mobile, lorsque le capot est divisé en deux moitiés).

Ces actionneurs électriques doivent être synchronisés de manière à éviter tout arc-boutement voire blocage subséquent du capot mobile.

La présente invention a ainsi notamment pour but de fournir un procédé de commande de ces actionneurs permettant de s'affranchir d'un risque de désynchronisation des actionneurs.

On atteint ce but de l'invention avec un procédé de commande d'une pluralité d'actionneurs d'un capot mobile d'inverseur de poussée, remarquable en ce qu'on mesure en temps réel les écarts de positions entre actionneurs adjacents, et en ce qu'on modifie le profil de vitesse du ou des actionneurs concerné(s) par un écart de position dépassant un seuil prédéterminé.

Grâce à ce procédé, dès qu'un écart de position trop important entre actionneurs voisins est décelé, on peut accélérer ou ralentir le ou les actionneur(s) concerné(s), de manière à combler cet écart et à éviter la déformation et/ou le blocage du capot mobile d'inverseur.

Suivant d'autres caractéristiques optionnelles du procédé selon l'invention :
- lorsqu'il ressort de ladite mesure que l'un des actionneurs est en retard par rapport aux autres actionneurs, on fait accélérer cet actionneur : ceci permet à l'actionneur en retard de rattraper les autres actionneurs ;
- lorsqu'il ressort de ladite mesure que l'un des actionneurs est en retard par rapport aux autres actionneurs, on fait décélérer ces autres actionneurs : cette option, qui permet d'aligner les autres actionneurs sur l'actionneur en retard, peut être utilisée soit directement, soit après que l'option précédente (accélération de l'actionneur en retard) ait échoué, soit encore simultanément avec cette option précédente ;
- lorsqu'il ressort de ladite mesure que l'un des actionneurs est en avance par rapport aux autres actionneurs, on fait décélérer cet actionneur : ceci permet d'aligner l'actionneur en avance sur les autres actionneurs ;
- lorsqu'il ressort de ladite mesure que l'un des actionneurs est en avance par rapport aux autres actionneurs, on fait accélérer ces autres actionneurs : cette option, qui permet aux autres actionneurs de rattraper l'actionneur en avance, peut être utilisée soit directement, soit après que l'option précédente (décélération de l'actionneur en avance) ait échoué, soit encore simultanément avec cette option précédente ;
- on commande lesdits autres actionneurs en pas-à-pas : cette commande en pas à pas des autres actionneurs, c'est-à-dire des actionneurs qui fonctionnent normalement, permet de réduire les risques d'arc-boutement ;
- on décale les commandes pas-à-pas desdits autres actionneurs : cette option permet d'imprimer au capot mobile des couples dans des directions différentes, ce qui est utile notamment pour franchir un point de blocage de l'un des vérins ;
- on arrête ledit capot mobile si l'un desdits actionneurs est bloqué ou si l'on ne réussit pas à compenser le retard et/ou l'avance dudit (desdits) actionneur(s) par rapport aux autres actionneurs : cette étape ultime permet d'éviter le blocage et/ou la déformation et/ou la casse du capot mobile.

D'autres caractéristiques et avantages de la présente invention apparaîtront à la lumière de la description qui va suivre et à l'examen des figures ci-annexées dans lesquelles :
- la figure 1 est une vue en coupe transversale d'un inverseur de poussée auquel est appliqué le procédé de commande selon l'invention,
- la figure 2 est une vue schématique des trois actionneurs du capot mobile de cet inverseur de poussée, lorsque ces trois actionneurs sont synchronisés,
- la figure 3 représente le profil type de vitesse de chacun de ces trois actionneurs, ainsi que l'enveloppe de variation de ce profil prévue dans le cadre de la présente invention,
- la figure 4 représente de manière schématique les seuils d'écart de position entre des actionneurs adjacents du capot mobile de l'inverseur de poussée de la figure 1, seuils à partir desquels certaines actions de commande sont déclenchées,
- la figure 5, analogue à la figure 2, illustre le cas où l'un des trois actionneurs du capot mobile se trouve en retard par rapport aux deux autres actionneurs,
- la figure 6, analogue à la figure 3, indique la correction de profil de vitesse qui est appliquée à l'actionneur en retard de la figure 5,
- la figure 7 indique les profils de vitesse pouvant être appliqués à deux actionneurs sains lorsque le troisième est en panne, voire est bloqué,
- la figure 8, analogue aux figures 2 et 5, illustre schématiquement le cas où l'un des trois actionneurs est en avance sur les deux autres,
- la figure 9, analogue aux figures 3 et 6, indique la modification apportée au profil de vitesse de l'actionneur en avance, et
- la figure 10 représente le cas combiné où l'un des actionneurs est en retard et un autre actionneur est en avance par rapport au profil de vitesse standard.

Dans la description qui suit, on va s'intéresser au cas particulier d'un inverseur de poussée dont le capot mobile s'étend sur pratiquement toute la circonférence de la nacelle, et qui est mû par trois actionneurs électriques.

Bien entendu, la présente invention n'est nullement limitée à cet exemple particulier, et s'applique aussi à un capot mobile mû par deux actionneurs électriques ou par plus de trois actionneurs électriques, ainsi qu'à un capot mobile formé de deux demi capots mobiles, éventuellement aptes à se déplacer indépendamment l'un de l'autre.

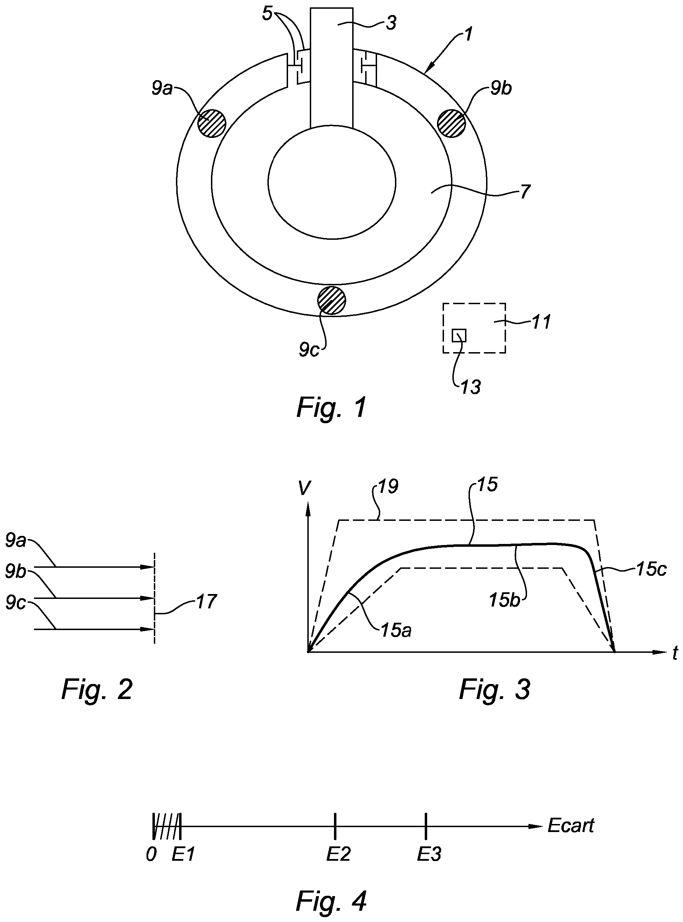

On se reporte donc à la figure 1, sur laquelle on a représenté de manière schématique un capot mobile d'inverseur de poussée, monté coulissant sur un mât entre une position « jet direct » et une position « jet inversé ».

Le coulissement du capot mobile 1 sur le mât 3 est permis par un système de rail et de glissière 5 connu en soi, et permet en phase d'atterrissage de dévier au moins une partie du flux d'air circulant dans la veine 7 vers l'avant de la nacelle équipée de cet inverseur de poussée.

Comme cela a été expliqué dans le préambule de la description, on peut de la sorte réduire significativement la distance de freinage de l'aéronef à l'atterrissage.

L'actionnement du capot mobile 1 entre les positions « jet direct » et « jet inversé » s'effectue au moyen d'une pluralité d'actionneurs électriques 9a, 9b, 9c, répartis sensiblement à 120° dans l'exemple représenté.

Comme cela est connu en soi, ces actionneurs électriques peuvent comprendre chacun typiquement un moteur électrique en prise avec une vis à billes par l'intermédiaire d'un mécanisme de réduction de vitesse.

Ces trois actionneurs électriques sont pilotés électroniquement par un superviseur 11 contenant une mémoire 13 dans laquelle sont stockés des profils de vitesse de ces actionneurs.

Par profil de vitesse, on entend une courbe de vitesse 15 (voir figure 3) de chaque actionneur en fonction du temps.

Comme cela est visible sur la figure 3, cette courbe type 15 comprend classiquement une première partie 15a d'accélération de l'actionneur, suivie d'un palier 15b de vitesse sensiblement constante, lui-même suivi d'une phase de décélération rapide 15c.

Pour que le fonctionnement de l'inverseur de poussée soit optimal, il importe que les trois actionneurs 9a, 9b, 9c soient synchronisés, c'est-à-dire qu'à chaque instant leurs positions soit sensiblement identiques.

Ceci est représenté de manière schématique sur la figure 2, où le sens de déplacement et les positions des trois vérins 9a, 9b, 9c sont représentés par trois flèches : l'alignement des extrémités de ces trois flèches sur la ligne en pointillés 17 indique la parfaite synchronisation en position des trois actionneurs.

A chaque instant, le superviseur 11 mesure les écarts en position existant entre deux actionneurs adjacents, c'est-à-dire en l'occurrence entre : 9a et 9b, 9b et 9c, 9c et 9a.

Cet écart de position entre chaque paire d'actionneurs adjacents est représenté de manière schématique sur la figure 4 : une première valeur d'écart E1 prédéterminée est représentative des imprécisions de mesure et de traitement ; une deuxième valeur d'écart E2 indique l'écart de position maximal toléré entre les paires d'actionneurs adjacents.

Cet écart maximal est déterminé notamment à partir des tolérances mécaniques des différentes pièces constitutives de l'inverseur de poussée.

Lorsque l'écart de position de deux actionneurs adjacents est supérieur à E2, une action de correction est déclenchée, laquelle dépend de la nature de l'écart, et sera décrite dans ce qui suit.

Lorsque l'écart de position entre deux actionneurs adjacents dépasse une troisième valeur d'écart prédéterminée E3 supérieure à E2, on arrête l'ensemble des actionneurs, de manière à éviter la déformation et/ou la casse de certaines pièces de l'inverseur de poussée.

Le procédé selon l'invention consiste essentiellement, lorsqu'au moins l'un des écarts mesurés entre les actionneurs adjacents se trouve dans la plage E2-E3, à déclencher une action de correction consistant en la modification du profil de vitesse du ou des vérins présentant une anomalie et/ou du ou de vérins fonctionnant normalement.

Cette modification du profil de vitesse est représentée schématiquement par l'enveloppe en pointillés 19 sur la figure 3.

Comme le montre cette enveloppe, la modification du profil de vitesse peut consister notamment en une accélération supérieure en début de course de l'actionneur (partie 15a de la courbe), et/ou en une augmentation de la vitesse de pallier (partie 15b de la courbe) et/ou en une moindre décélération en fin de course d'actionnement (partie 15c de la courbe).

Les principes généraux définis ci-dessus vont à présent être appliqués à différents cas de figures, fournis à titre d'exemples.

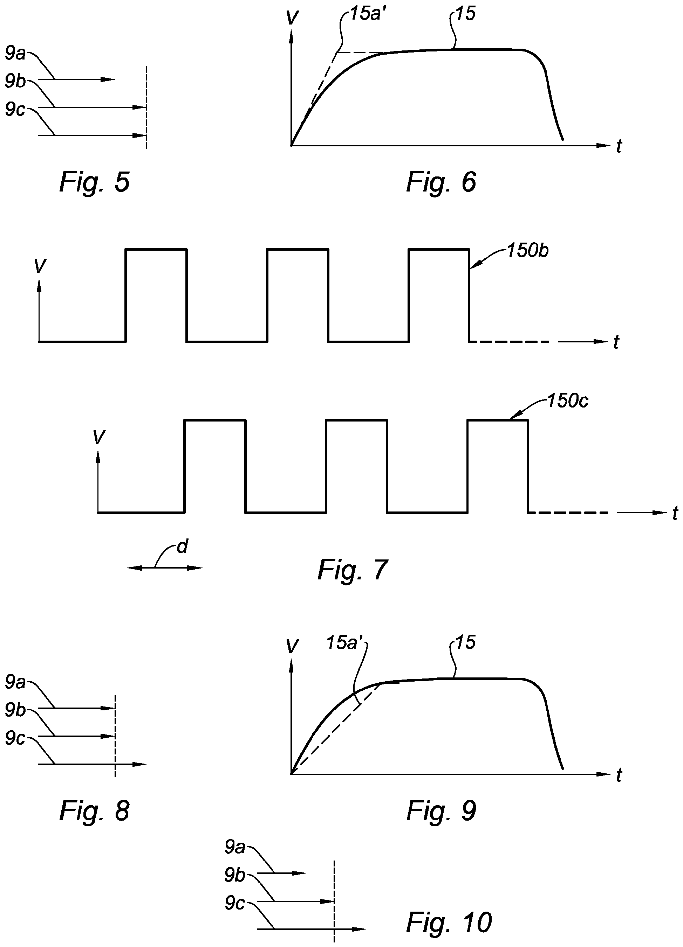

La figure 5 représente le cas où l'un des actionneurs 9a est en retard par rapport aux deux autres actionneurs 9b, 9c.

Ce retard peut être dû en particulier à une panne de cet actionneur, une telle panne pouvant être de nature électrique (perte de contrôle de l'actionneur par le superviseur 11, panne de moteur électrique) ou mécanique (usure interne, augmentation du frottement, dégradation des roulements à billes, vibrations, variations de température, dilatation différentielle, etc.).

Lorsque le superviseur 11 détecte le retard de l'actionneur 9a, il peut commander par exemple une accélération supérieure de cet actionneur en début de course : ceci est représenté de manière schématique par la partie en pointillés 15a' ajoutée sur la courbe de profil de vitesse standard 15 de la figure 6.

Dès que l'actionneur 9a a rejoint les positions des deux autres actionneurs 9b, 9c, on recommence à appliquer à cet actionneur 9a le profil de vitesse standard 15.

Si cette correction n'est pas suffisante, on peut envisager, de manière simultanée ou subséquente de corriger les profils standards de vitesse des deux autres actionneurs 9b, 9c, de manière à ralentir ces deux actionneurs et à les caler sur l'actionneur plus lent 9a.

Il est à noter que ce ralentissement des deux actionneurs 9b et 9c peut s'effectuer selon des profils de vitesse particuliers 150b (appliqué à l'actionneur 9b) et 150c (appliqué à l'actionneur 9c), représentés sur la figure 7.

Comme on peut le voir sur cette figure, ces profils de vitesse sont du type pas-à-pas (appelés encore « à impulsions »).

Ces profils de vitesse particuliers sont préconisés notamment lorsque l'actionneur en retard 9a est confronté à un « point dur » (coincement).

Il s'avère en effet que dans ce cas particulier, ces profils de vitesse des deux actionneurs sains 9b, 9c permettent de limiter les risques d'arc-boutement du capot mobile 1.

Plus particulièrement, et comme cela est visible sur la figure 7, on peut décaler d'une durée d les profils de vitesse pas-à-pas appliqués aux deux actionneurs sains 9b, 9c.

Ce décalage temporel d permet d'appliquer au capot mobile 1 des couples dans des directions différentes, et ainsi de favoriser le décoincement de l'actionneur 9a.

Dans le cas représenté sur la figure 8, l'un des actionneurs 9c est en avance par rapport aux autres actionneurs 9a, 9b.

Dans ce cas, le superviseur 11 peut notamment commander une moindre accélération de cet actionneur en début de course, comme cela est représenté par la ligne en pointillé 15a' sur la figure 9.

Si cette correction suffit pour synchroniser les trois actionneurs, alors le superviseur 11 réapplique un profil de vitesse standard à l'actionneur 9c.

Si c'est nécessaire, et de manière simultanée ou subséquente, on peut aussi accélérer les deux actionneurs 9a, 9b, de manière qu'ils rattrapent l'actionneur en avance 9c.

Dès que ce rattrapage est réalisé, on réapplique aux deux actionneurs 9a, 9b la courbe de vitesse standard.

Dans la situation représentée à la figure 10, il y a d'une part un actionneur en retard 9a, et d'autre part un actionneur en avance 9c.

Dans ce cas particulier, on combine de manière simultanée ou subséquente les scénarios correspondants aux figures 5 et 8, décrits ci-dessus.

Plus précisément, on peut commencer par accélérer l'actionneur 9a, puis ralentir l'actionneur 9c, puis, s'il continue d'exister un décalage des deux actionneurs par rapport à un troisième, à ralentir ou à accélérer ces deux actionneurs, en fonction de la situation observée.

Comme on peut donc le comprendre à la lumière de ce qui précède, le procédé selon l'invention fournit un moyen extrêmement efficace de diagnostic d'écarts de position entre deux paires d'actionneurs adjacents, et de correction en temps réel de ces écarts.

Cette correction permet de limiter les risques de désynchronisation entre les différents actionneurs, voire de débloquer un ou plusieurs actionneurs en panne, ce qui permet de limiter les risques de blocage, de déformation voire de casse du capot mobile de l'inverseur de poussée.

Lorsque les corrections des profils de vitesse s'avèrent insuffisantes, c'est-à-dire lorsque malgré ces corrections des écarts de position entre des vérins continuent de s'accroître, au point de franchir la valeur seuil E3, on arrête l'ensemble du système, de manière à éviter la déformation, voire la casse du capot mobile d'inverseur de poussée.

Le procédé selon l'invention est d'autant plus nécessaire que les temps de mise en mouvement du capot mobile sont très rapides et ne permettent pas au système d'avoir un équilibre quasi naturel.

Bien entendu, la présente invention n'est nullement limitée au mode de réalisation décrit et représenté, et s'applique notamment à un capot mobile d'inverseur de poussée comprenant deux ou plus de trois actionneurs, et se composant éventuellement de deux demi-capots mobiles.

## Revendications

1. Procédé de commande d'une pluralité d'actionneurs (9a, 9b, 9c) d'un capot mobile (1) d'inverseur de poussée, **caractérisé en ce qu'**on mesure en temps réel les écarts de positions entre actionneurs adjacents, et **en ce qu'**on modifie le profil de vitesse (15) du ou des actionneurs concerné(s) par un écart de position dépassant un seuil (E2) prédéterminé.

2. Procédé selon la revendication 1, **caractérisé en ce que** lorsqu'il ressort de ladite mesure que l'un (9a) des actionneurs est en retard par rapport aux autres actionneurs (9b, 9c), on fait accélérer cet actionneur (9a).

3. Procédé selon l'une des revendications 1 ou 2, **caractérisé en ce que** lorsqu'il ressort de ladite mesure que l'un des actionneurs (9a) est en retard par rapport aux autres actionneurs (9b, 9c), on fait décélérer ces autres actionneurs (9b, 9c).

4. Procédé selon l'une quelconque des revendications précédentes, **caractérisé en ce que** lorsqu'il ressort de ladite mesure que l'un des actionneurs (9c) est en avance par rapport aux autres actionneurs (9a, 9b), on fait décélérer cet actionneur (9c).

5. Procédé selon la revendication 1, **caractérisé en ce que** lorsqu'il ressort de ladite mesure que l'un des actionneurs (9c) est en avance par rapport aux autres actionneurs (9a, 9b), on fait accélérer ces autres actionneurs (9a, 9b).

6. Procédé selon l'une quelconque des revendications 2 à 5, **caractérisé en ce qu'**on commande lesdits autres actionneurs en pas-à-pas (15ab, 150c).

7. Procédé selon la revendication 6, **caractérisé en ce qu'**on décale les commandes pas-à-pas (150b, 150c) desdits autres actionneurs.

8. Procédé selon l'une quelconque des revendications précédentes, **caractérisé en ce qu'**on arrête ledit capot mobile (1) si l'un desdits actionneurs (9a, 9b, 9c) est bloqué ou si l'on ne réussit pas à compenser le retard et/ou l'avance dudit (desdits) actionneur(s) par rapport aux autres actionneurs.

## Patentansprüche

1. Verfahren zum Steuern einer Vielzahl von Stellgliedern (9a, 9b, 9c) einer mobilen Abdeckung (1) einer Schubumkehr, **dadurch gekennzeichnet, dass** man in Echtzeit die Positionsabweichungen zwischen angrenzenden Stellgliedern misst, und dadurch, dass man das Geschwindigkeitsprofil (15) des (oder der) Stellglieds (-er) ändert, das (die) von einer Positionsabweichung betroffen ist (sind), die einen vorbestimmten Grenzwert (E2) übersteigt.

2. Verfahren nach Anspruch 1, **dadurch gekennzeichnet, dass**, wenn aus der besagten Messung hervorgeht, dass eines (9a) der Stellglieder im Verhältnis zu den anderen Stellgliedern (9b, 9c) verspätet ist, man dieses Stellglied (9a) beschleunigen lässt.

3. Verfahren nach einem der Ansprüche 1 oder 2, **dadurch gekennzeichnet, dass**, wenn aus der besagten Messung hervorgeht, dass eines der Stellglieder (9a) im Verhältnis zu den anderen Stellgliedern (9b, 9c) verspätet ist, man diese anderen Stellglieder (9b, 9c) verzögern lässt.

4. Verfahren nach einem der vorhergehenden Ansprüche, **dadurch gekennzeichnet, dass**, wenn aus der besagten Messung hervorgeht, dass eines der Stellglieder (9c) im Verhältnis zu den anderen Stellgliedern (9a, 9b) zu früh ist, man dieses Stellglied (9c) verzögern lässt.

5. Verfahren nach Anspruch 1, **dadurch gekennzeichnet, dass**, wenn aus der besagten Messung hervorgeht, dass eines der Stellglieder (9c) im Verhältnis zu den anderen Stellgliedern (9a, 9b) zu früh ist, man diese anderen Stellglieder (9a, 9b) beschleunigen lässt.

6. Verfahren nach einem der Ansprüche 2 bis 5, **dadurch gekennzeichnet, dass** man die besagten anderen Stellglieder schrittweise (15ab, 150c) ansteuert.

7. Verfahren nach Anspruch 6, **dadurch gekennzeichnet, dass** man die schrittweisen Ansteuerungen (150b, 150c) der besagten anderen Stellglieder verschiebt.

8. Verfahren nach einem der vorhergehenden Ansprüche, **dadurch gekennzeichnet, dass** man die besagte mobile Abdeckung (1) anhält, wenn eines der besagten Stellglieder (9a, 9b, 9c) blockiert ist, oder wenn es nicht gelingt, die Verspätung und/ oder die Verfrühung des (der) besagten Stellglieds (-er) im Verhältnis zu den anderen Stellgliedern zu kompensieren.

## Claims

1. A method for controlling a plurality of actuators (9a, 9b, 9c) of a thrust reverser movable cowl (1), **characterized in that** the deviations of positions between adjacent actuators are measured in real time, and **in that** the velocity profile (15) of the one or more concerned actuator(s) is modified by a position deviation exceeding a predetermined threshold (E2).

2. The method according to claim 1, **characterized in that** when it results from said measurement that one of the actuators (9a) is delayed relative to the other actuators (9b, 9c), this actuator (9a) is accelerated.

3. The method according to any of claims 1 or 2, **characterized in that** when it results from said measurement that one of the actuators (9a) is delayed relative to the other actuators (9b, 9c), these other actuators (9b, 9c) are decelerated.

4. The method according to any one of the preceding claims, **characterized in that** when it results from said measurement that one of the actuators (9a) is in advance relative to the other actuators (9a, 9b), this actuator (9a) is decelerated.

5. The method according to claim 1, **characterized in that** when it results from said measurement that one of the actuators (9a) is in advance relative to the other actuators (9a, 9b), these other actuators (9a, 9b) are accelerated.

6. The method according to any one of claims 2 to 5, **characterized in that** said other actuators are controlled step by step (15ab, 150c).

7. The method according to claim 6, **characterized in that** the stepwise instructions (150b, 150c) of said other actuators are shifted.

8. The method according to any one of the preceding claims, **characterized in that** said movable cowl (1) is stopped if one of said actuators (9a, 9b, 9c) is blocked or if it proves to be impossible to compensate the delay and/or the advance of the said actuator(s) relative to the other actuators.
